# EUROPEAN PATENT APPLICATION

(11) **EP 4 484 219 A1**
(43) Date of publication of application: **01.01.2025**
(21) Application number: 24181953.1
(22) Date of filing: 13.06.2024
(51) Int. Cl.: B60P 7/08

(54) **LUGGAGE RING ASSEMBLY**

(30) Priority: 23.06.2023 EP 23382644
(71) Applicant: Illinois Tool Works Inc., Glenview IL 60025 (US)
(72) Inventor: FUENTES DOMINGO, Ismael, Glenview, IL 60025 (US); RIBES MARTI, Oscar, Glenview, IL 60025 (US)
(74) Representative: HGF

(57) **Abstract**

The application relates to a luggage ring assembly (202) comprising a quick release fastener (204), a mounting member (206) and a ring member (208), wherein said quick release fastener (204) is adapted to operably engage with an aperture (302) of said ring member (208) via said mounting member (206).

## Description

### TECHNICAL FIELD OF INVENTION

The invention relates to a luggage ring assembly. In particular, the invention relates to a luggage ring assembly with a quick release mechanism.

### BACKGROUND

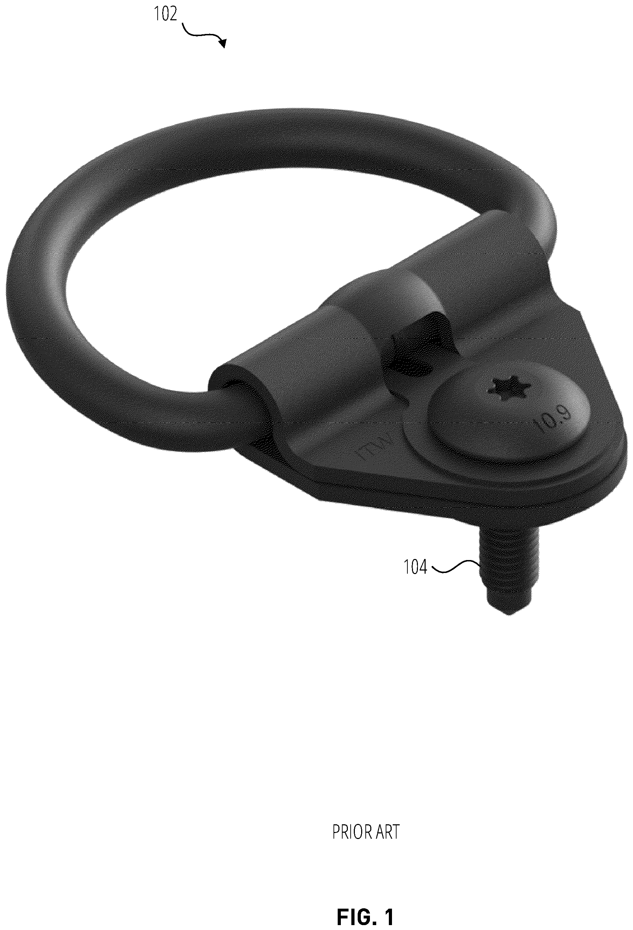

FIG. 1 shows a known luggage ring 102 that fastens to a structure such as a vehicle chassis via a screw 104 and nut, allowing further components, such as a vehicle panel to be fastened. The known luggage ring requires a welding operation for assembly, such as welding a backing nut to the body in white. The luggage ring must then be screwed onto the backing nut, via a screw. An operative must use a tool to attach the luggage ring. This complicated manufacture and is time consuming.

Furthermore, placement of the luggage ring is inflexible. The luggage ring can only be placed at the location of the welded back nut. Relocation, or addition, of luggage rings is difficult, requiring additional back nuts to be welded on. This is undesirable, costly, and requires the services of a trained professional. An end user is unlikely to be able to perform the steps required to move or add a luggage ring post manufacture of the body in white.

### SUMMARY OF THE INVENTION

According to the disclosure there is provided a luggage ring assembly comprising a quick release fastener, a mounting member and a ring member, wherein said quick release fastener is adapted to operably engage with an aperture of said ring member via said mounting member. The quick release fastener allows easy placement, and securing of the luggage ring assembly to a body in white, either at manufacturing stage, or in use of the final product by an end user. Multiple luggage ring assemblies may be provided, fitted, positioned, and repositioned by an end user. That the luggage ring assembly fastens to the body in white ensures a high capacity fixture is provided capable of performing its function of providing a connection point from which luggage may be secured.

Suitably, said mounting member is made of a resilient material and adapted to mountingly engage with said aperture of said ring member. Use of a resilient material allows the ring member and/or quick release fastener to snap or interference fit with the mounting member, without additional fixings.

Preferably, the mounting member comprises a dish. The dish provides a low friction surface either via material selection, or by shape (e.g. A dished surface exerts less surface area upon the ring member, thereby facilitating movement between the two parts).

Optionally, the luggage ring assembly further comprises a spring arranged to act upon the ring member. The spring facilitates rotation of the luggage ring relative to the bracket.

Appositely, the aperture is arranged within a bracket of the ring member. The bracket therefore provides a suitable fixation through which applied luggage forces may be transferred to the quick release fastener and subsequently the body in white.

Suitably, the ring member comprises a luggage ring. The luggage ring takes the form of a loop of material, which may be any suitable shape such as circular, D shape, trapezoidal etc... The loop of material may be a complete loop or comprise a break, depending on a rated strength. Different luggage ring assemblies may be rated to bear different loads or masses relative to other luggage ring assemblies, and their design may vary accordingly.

Preferably, the luggage ring is rotatable relative to the bracket and optionally, the spring is arranged to act upon the luggage ring of the ring member. The spring may urge the luggage ring out of a plane of the bracket, such that the luggage ring always sits proud of a surface to which the luggage ring assembly is attached, thereby ensuring an end user may easily grasp the luggage ring. Rotation of the luggage ring relative to the bracket ensures the luggage ring may be arranged at an optimal angle between the luggage ring assembly and luggage that is being secured to the luggage ring assembly to ensure an effective and secure fixation.

Optionally, in use, the mounting member is rotatable relative to the ring member. In use, the luggage ring may be repositionable relative to the quick release fastener. The quick release fastener may act as a central axis about which the luggage ring may rotate. Alternatively, the mounting member may not be circular in shape, and as such may provide an offset for rotation of the luggage ring.

Appositely, the luggage ring rotates relative to to the bracket in a direction that is perpendicular to the rotation of the mounting member relative to the ring member. In this way two degrees of freedom of movement are provided to the luggage ring assembly allowing a broad variety of shapes and sizes of luggage to be secured by the luggage ring assembly.

Suitably, the quick release fastener comprises a lever and cam assembly, such that movement of the lever, rotates the cam assembly and results in action of the quick release fastener.

Preferably, the quick release fastener comprises a clip. Preferably, the clip is actionable by via the lever. The clip interfaces with the body in white and secures the luggage ring assembly to the frame on which the luggage ring assembly is intended to be fastened.

Optionally, the clip comprises one or more teeth operable between an expanded configuration and a retracted configuration via the lever and cam assembly. The teeth may move between biting engagement with the body in white and a retracted position, remote from the body in white which allows the luggage ring assembly to be fastened to, or removed from, the frame. Preferably, the quick release fastener may be operated by hand, without additional tools or cheater bars.

Appositely, the mounting member further comprises a backing plate. The backing plate may be located at an interface between the mounting member and the quick release fastener. The backing plate may be formed of a low friction material to facilitate movement between the mounting member and the quick release fastener, to allow easy location of the parts.

Suitably, the quick release fastener is held in a fixed position relative to the mounting member. The mounting member may be provided with a keyed aperture that corresponds to a complementary shape of the quick release fastener. The keyed aperture may be a shape that prevents rotation, such as square, triangular, other regular, or irregular polygon, or the keyed aperture may be circular but otherwise provided with a keying feature, such as a pier.

### BRIEF DESCRIPTION OF THE DRAWINGS

Embodiments of the invention are now described, by way of example only, hereinafter with reference to the accompanying drawings.
FIG. 1 illustrates a perspective view of a known luggage ring (Prior Art)
FIG. 2 illustrates a perspective view of (a) an example luggage ring of the present invention and (b) a rail provided in a floor or side wall suitable to operably engage with the fastener of the luggage ring.
FIG. 3 illustrates an exploded view of the example luggage ring of FIG. 2.

### DETAILED DESCRIPTION

Certain terminology is used in the following description for convenience only and is not limiting. The words 'right', 'left', 'lower', 'upper', 'front', 'rear', 'upward', 'down' and 'downward' designate directions in the drawings to which reference is made and are with respect to the described component when assembled and mounted. The words 'inner', 'inwardly', `outer' and 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled' and 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, "first", "second" and "third" etc. merely indicate that different instances of like objects are being referred to and are not intended to imply that the objects so described must be in a given sequence, either temporally, spatially, in ranking or in any other manner.

Like reference numerals are used to depict like features throughout.

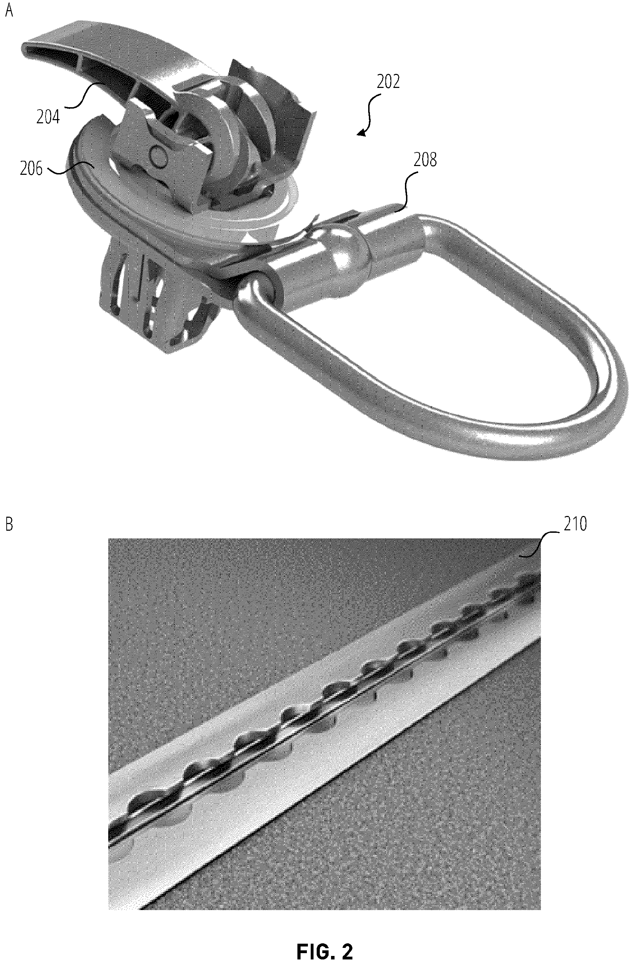

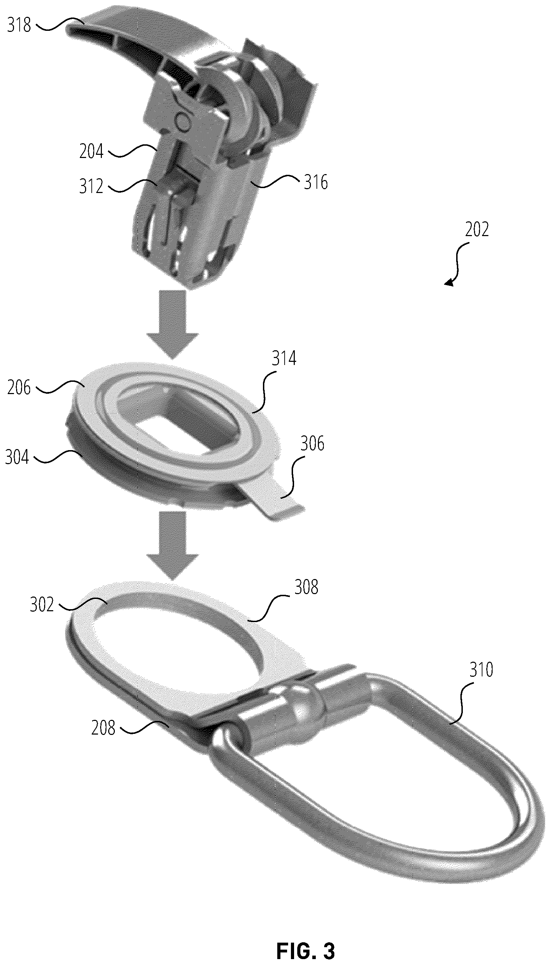

FIG. 2 shows the new luggage ring, and FIG. 3 shows the assembly of the luggage ring.

The illustrated example embodiment relates to a luggage ring having a metal clip with a quick release mechanism. The new luggage ring makes it possible to adapt its position depending on the load size, and requires less time for assembly because it is provided with a quick release mechanism. The new luggage ring does not require a screw and nut for assembly, and can be assembled without requiring welding (as well as reducing the need for line tools).

As shown in FIG. 2A the luggage ring assembly 202 comprises a quick release fastener 204, mounting member 206, and ring member 208.

The quick release fastener 204 comprises a lever and cam assembly, connected to a clip. Operation of the lever moves the quick release fastener 204 between an extended configuration and a retracted configuration. This can mean the clip is arranged remote from the lever in the extended configuration, relative to the position of the clip relative to the lever in the retracted configuration. In this way, when placed in a suitable location of the body in white, the quick release fastener 204 may pinch the body in white when in the retracted configuration as the lever urges the clip towards the quick release fastener 204, thereby making the luggage ring assembly 202 clasp the body in white.

Alternatively, the extended configuration may be one where teeth are deployed from the clip, such that when the clip is located on the body in white, the teeth are moved to a deployed position that would interfere with removal of the luggage ring assembly 202 from the body in white. Movement of the lever to the retracted position may urge the teeth towards the clip allowing the clip to then be withdrawn from the body in white without the teeth fouling on the body in white.

A combination of both the above strategies may be used if required. A certain degree of play between the luggage ring assembly 202 and the body in white when the clip is gripping the body in white may be acceptable in order to allow the ring member 208 to rotate relative to the body in white about the mounting member 206.

As shown in FIG. 2 the body in white may be provided with a track having a plurality of fixation points to receive the clip of the luggage ring assembly 202. An end user may select any of these points to locate and attach the luggage ring assembly 202, and may subsequently reposition the luggage ring assembly 202 and any suitable point upon the track.

The body in white may be provided with discrete location points absent the track 210 separately. In this way manufacture of the body in white is simplified as only the track 210 need be attached (if at all -it may be omitted), or a suitable number of apertures may be formed in the body in white to accept the luggage ring assembly 202 at separate locations, with no need to weld a backing nut on.

FIG. 3 shows an exploded view of the luggage ring assembly 202 of FIG. 2 which shares like references.

A lever 318 is provided which acts as a mechanism to assemble / disassemble the part to/from the body in white, particularly a cargo area of the body in white.

A clip 316 is provided to hold (jointly with the luggage ring 310) the cargo load to the body in white to secure and prevent movement of the luggage in the finished product. The luggage may be secured to the luggage ring assembly 202 by any suitable means including hooks, tethers, straps, bungee cords etc...

A backing plate 314 reduces the friction between the components which are intended to rotate and those that are intended to remain relatively static.

The spring 306 allow easy rotation of the luggage ring 310 with regards to the bracket 308 as described above.

A dish 304 allows rotation of the bracket 308 but prevents the clip 316 wearing.

The bracket 308 is part of the luggage ring 310 and provides a substrate into which the aperture 302 may be formed to receive the quick release fastener 204.

The luggage ring 310 is as described above and provides an interface with with to attach luggage to the body in white when the luggage ring assembly 202 is in place.

It will be appreciated by persons skilled in the art that the above detailed examples have been described by way of example only and not in any limitative sense, and that various alterations and modifications are possible without departing from the scope of the invention as defined by the appended claims. Various modifications to the detailed examples described above are possible.

Through the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract or drawings), or to any novel one, or any novel combination, of the steps of any method or process so disclosed.

## Claims

1. A luggage ring assembly (202) comprising a quick release fastener (204), a mounting member (206) and a ring member (208), wherein said quick release fastener (204) is adapted to operably engage with an aperture (302) of said ring member (208) via said mounting member (206).

2. The luggage ring assembly (202) of claim 1, wherein said mounting member (206) is made of a resilient material and adapted to mountingly engage with said aperture (302) of said ring member (208).

3. The luggage ring assembly (202) of claim 1 or 2, wherein the mounting member (206) comprises a dish (304).

4. The luggage ring assembly (202) of any one of claims 1 to 3, further comprising a spring (306) arranged to act upon the ring member (208).

5. The luggage ring assembly (202) of any one of claims 1 to 4, wherein the aperture (302) is arranged within a bracket (308) of the ring member (208).

6. The luggage ring assembly (202) of any one of claims 1 to 5, wherein the ring member (208) comprises a luggage ring (310).

7. The luggage ring assembly (202) of claim 6, when dependent upon claim 5, wherein the luggage ring (310) is rotatable relative to the bracket (308) and optionally wherein, when dependent upon claim 4, the spring (306) is arranged to act upon the luggage ring (310) of the ring member (208).

8. The luggage ring assembly (202) of any one of claims 1 to 7, wherein, in use, the mounting member (206) is rotatable relative to the ring member (208).

9. The luggage ring assembly (202) of claim 8, when dependent upon claim 7, wherein the luggage ring (310) rotates relative to to the bracket (308) in a direction that is perpendicular to the rotation of the mounting member (206) relative to the ring member (208).

10. The luggage ring assembly (202) of any one of claims 1 to 9, wherein the quick release fastener (204) comprises a lever and cam assembly.

11. The luggage ring assembly (202) of any one of claims 1 to 10, wherein the quick release fastener (204) comprises a clip (316).

12. The luggage ring assembly (202) of claim 11, when dependent upon claim 10, wherein the clip (316) comprises one or more teeth (312) operable between an expanded configuration and a retracted configuration via the lever and cam assembly.

13. The luggage ring assembly (202) of any one of claims 1 to 12, wherein the mounting member (206) further comprises a backing plate (314).

14. The luggage ring assembly (202) of any one of claims 1 to 13, wherein the quick release fastener (204) is held in a fixed position relative to the mounting member (206).
